Europäisches Patentamt

European Patent Office

Office européen des brevets

(19)

(11) Veröffentlichungsnummer: **0 311 593 B1**

## (12) EUROPÄISCHE PATENTSCHRIFT

(45) Veröffentlichungstag der Patentschrift:
23.05.90

(21) Anmeldenummer: **88890240.0**

(22) Anmeldetag: **21.09.88**

(51) Int. Cl.⁵: **B29B 13/02**, B29B 7/84,
E06B 3/66

(54) Vorratszylinder zum Auspressen einer pastösen Masse.

(30) Priorität: **05.10.87 AT 2535/87**

(43) Veröffentlichungstag der Anmeldung:
**12.04.89 Patentblatt 89/15**

(45) Bekanntmachung des Hinweises auf die Patenterteilung:
**23.05.90 Patentblatt 90/21**

(84) Benannte Vertragsstaaten:
**AT BE CH DE ES FR GB GR IT LI LU NL SE**

(56) Entgegenhaltungen:
**AT-B- 365 550**
**US-A- 3 196 597**
**US-A- 3 523 147**
**US-A- 4 632 277**

(73) Patentinhaber: **Lisec, Peter, Bahnhofstrasse 34,
A-3363 Amstetten-Hausmening(AT)**

(72) Erfinder: **Lisec, Peter, Bahnhofstrasse 34,
A-3363 Amstetten-Hausmening(AT)**

(74) Vertreter: **Beer, Manfred, Dipl.-Ing. et al, Lindengasse 8,
A-1070 Wien(AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft einen Vorratszylinder zum Auspressen einer pastösen Masse, beispielsweise ein Vorratszylinder für Butylkautschuk in Vorrichtungen zum Beschichten der Seitenflächen von Abstandhalterrahmen für Isolierglas, wobei der Vorratszylinder einen mit Druck beaufschlagbaren Kolben enthält und auspreßseitig eine Verschlußplatte vorgesehen ist, die vom Mantel des Vorratszylinders lösbar ist, und mit einer dem Vorratszylinder zugeordneten Vorrichtung zum Zusammenspannen von Vorratszylinder und Verschlußplatte.

Ein derartiger Vorratszylinder ist beispielsweise aus der AT-B-365 550 bekannt.

Wenn ein derartiger Vorratszylinder frisch mit auszupressender pastöser Masse beschickt wird, muß er entlüftet werden, was insbesondere bei Vorrichtungen zur Beschichtung von Abstandhalterrahmen für Isolierglas von erheblicher Bedeutung ist, damit in den auf den Abstandhalter beidseitig aufgebrachten Streifen aus Butylkautschuk keine Unterbrechungen entstehen. Bislang wurde die Entlüftung so vorgenommen, daß ein Entlüftungsventil so lange betätigt wurde, bis aus ihm nur mehr pastöse Masse (Butylkautschuk) austrat. Abgesehen davon, daß diese Art der Entlüftung viel Zeit in Anspruch nimmt, geht bei ihr auch eine nicht unerhebliche Menge der pastösen Masse verloren.

Der Erfindung liegt die Aufgabe zugrunde, den bekannten Vorratszylinder in der Weise weiterzubilden, daß die Entlüftung rasch und einfacher als bisher ausgeführt werden kann.

Erfindungsgemäß wird dies dadurch erreicht, daß die Vorrichtung zum Zusammenspannen von Vorratszylinder und Verschlußplatte einen Druckmittelmotor, vorzugsweise einen Hydraulikzylinder aufweist, der bei mit der auszupressenden Masse beschicktem und mit Druck beaufschlagtem Vorratszylinder über ein Ventil in der Rücklaufleitung für das Druckmedium kurzzeitig entlastbar ist, so daß der Vorratszylinder kurzzeitig von der Verschlußplatte lösbar ist.

Die Erfindung geht von der Erkenntnis aus, daß beim kurzzeitigen Lösen des Vorratszylinders von seiner Verschlußplatte ausschließlich Luft aus dem Zylinder austritt, da die pastöse Masse wegen ihrer Konsistenz und ihrer Trägheit viel langsamer als Luft aus dem Spalt zwischen dem Zylinder und seiner Verschlußplatte austritt, auch wenn sie mit Druck beaufschlagt ist.

Weitere Einzelheiten und Merkmale der Erfindung ergeben sich aus den Unteransprüchen und der nachfolgenden Beschreibung, in welcher auf die Zeichnungen Bezug genommen wird. Es zeigt

Fig. 1 einen in eine Butylbeschichtungsvorrichtung für Abstandhalterrahmen eingebauten Vorratszylinder und

Fig. 2 schematisch einen Vorratszylinder mit der ihm zugeordneten Verschlußplatte und den Leitungen für das Hydraulikmedium.

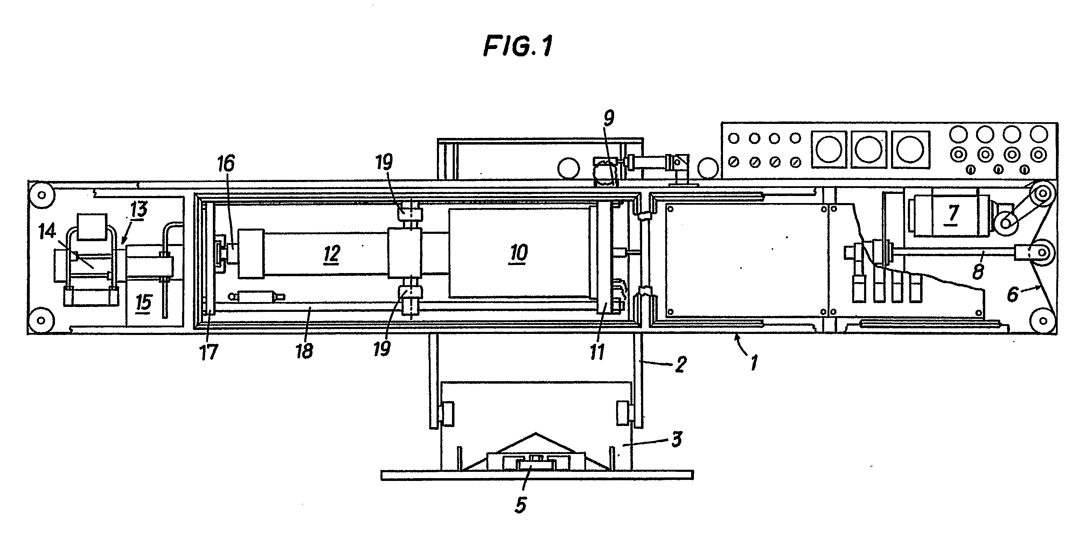

Die in Fig. 1 gezeigte, an sich aus der AT-B-365 550 bekannte Vorrichtung umfaßt ein Gehäuse 1, das über einen Wagen 2 auf einem Stativ 3 in Höhenrichtung verschiebbar ist. Zur Betätigung ist am Fuß des Stativs 3 ein Fußschalter 5 vorgesehen. Das Gehäuse 1 trägt oben eine Konsole mit den für die Bedienung der Vorrichtung notwendigen Schaltern bzw. Anzeigegeräten.

Um das Gehäuse 1 herumverlaufend ist ein Transportband 6 vorgesehen, das von einem Antriebsmotor 7 in Bewegung gesetzt werden kann und dem eine Spannvorrichtung 8 zugeordnet ist. Mittels des Transportbandes 6 werden die zu beschichtenden Distanzprofilrahmen zwischen Düsen 9 hindurchbewegt und dabei beidseitig mit Dicht- bzw. Klebemittel (z.B. Butylkautschuk), beschichtet.

Das Dicht- bzw. Klebemittel, vorzugsweise ein Butylkautschuk, ist in einem Vorratszylinder 10 enthalten und wird aus diesem über eine Verschlußplatte 11, die gegebenenfalls beheizt ist, zu den Düsen 9 gedrückt. Zur Beaufschlagung des Preßzylinders 12, dessen Kolben das Dicht- bzw. Klebemittel durch die Verschlußplatte 11 aus dem Vorratszylinder 10 herauspreßt, ist ein hydraulischer Antrieb 13 vorgesehen. Der hydraulische Antrieb 13 weist eine beispielsweise pneumatisch beaufschlagte Kolbenpumpe 14 und einen Vorratsbehälter 15 auf und ist vorzugsweise so wie in der AT-B-315 404 beschrieben, konstruiert.

Zur Abdichtung des Vorratszylinders 10 gegenüber der Verschlußplatte 11 ist eine selbstspannende Preßeinheit vorgesehen. Der den Vorratszylinder 10 gegen die Verschlußplatte 11 drückende Spannzylinder 16 ist in der gezeigten Ausführungsform mit dem Preßzylinder 12, der den Kolben des Vorratszylinders 10 beaufschlagt, zu einer Druckeinheit kombiniert. Die Kolbenstange des Spannzylinders 16 stützt sich dabei gegen ein Widerlager 17 eines Hilfsrahmens 18, der an seinem andern Ende die Verschlußplatte 11 trägt.

Soll in den Vorratszylinder 10 Dicht- bzw. Klebemittel nachgefüllt werden, so wird zunächst der Kolben des Preßzylinders 12 und dann der des Spannzylinders 16 zurückgeholt. Nach völliger Freistellung wird der Vorratszylinder 10 von der Verschlußplatte 11 abgehoben und kann nun um Lager 19 aus dem Gehäuse 1 herausgeschwenkt werden. Nach dem Einfüllen von Dicht- bzw. Klebemittel in den gut zugänglichen Vorratszylinder 10 wird dieser zusammen mit der Zylindereinheit, bestehend aus dem Spannzylinder 16 und dem Preßzylinder 12, in die ursprüngliche Lage zurückgeschwenkt.

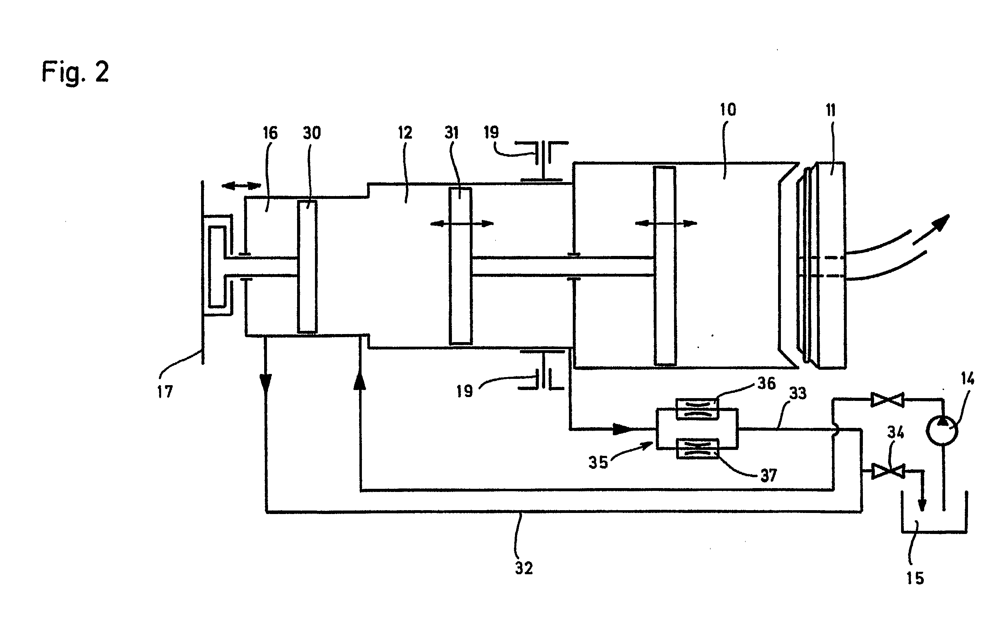

Der Spannzylinder 16 und der Preßzylinder 12, der den Kolben im Vorratszylinder 10 beaufschlagt, ist zu einer doppelt wirkenden Zylindereinheit (Fig. 2) zusammengefaßt. Dabei wirken der Kolben 30 des Spannzylinders 16 und der Kolben 31 des Preßzylinders 12 in entgegengesetze Richtungen. Dadurch, daß der Kolben 30 des Spannzylinders 16 kleiner ist und beide Kolben mit dem gleichen Druck beaufschlagt werden, wirkt auf den Kolben 31 des Preßzylinders 12 eine höhere Kraft und drückt den Vorratszylinder 10, der im Hilfsrahmen 18 in einem zwischen den Lagern 19 angeordneten Ring verschiebbar gelagert ist, gegen die Verschlußplatte 11. So wird der Vorratszylinder 10 gegenüber der Verschlußplatte 11 abgedichtet. Durch diese Konstruktion ist auch gewährleistet, daß Spann- und Preßzylinder immer nur gemeinsam beaufschlagt werden können.

Wie aus Fig. 2 ersichtlich, sind die Rückleitungen 32 und 33 des Preßzylinders 12 und des Spannzylinders 16 mit einem Ventil 34 ausgestattet. Vor dem Ventil 34 mündet die Rückleitung 32 in die Rückleitung 33 ein. In der Rückleitung 33 des Preßzylinders 2 ist weiters eine Drosselstelle 35 vorgesehen, die im gezeigten Ausführungsbeispiel zwei Drosseln 36 und 37 aufweist.

Wird das Ventil 34 geöffnet, dann entlastet der Spannzylinder 16 rascher als der Preßzylinder 12, so daß der Vorratszylinder 10 von seiner Heiz- bzw. Verschlußplatte kurzfristig abgehoben und durch den zwischen dem Vorratszylinder 10 und der Verschlußlatte 11 gebildeten Spalt Luft aus dem Vorratszylinder 10 ausströmen kann.

Dem Ventil 34 ist mit Vorteil eine Zeitsteuerung zugeordnet. So kann dieses Ventil, das vorzugsweise ein Elektromagnetventil ist, auch ohne große Aufmerksamkeit der Bedienungsperson nur kurzfristig geöffnet werden, wenn der Vorratszylinder 10 entlüftet werden soll.

Im Rahmen der Erfindung ist noch eine Ausführungsform denkbar, bei welcher der Spannzylinder der Verschlußplatte 11 zugeordnet ist.

Die Verschlußplatte 11 muß nicht unbedingt beheizbar sein, insbesondere wenn der Vorratszylinder 10 selbst mit einer Heizung ausgestattet ist.

Falls der Vorratszylinder 10 ein nur kleineres Volumen besitzt und über eine Leitung absatzweise mit pastöser Masse (Butylkautschuk) beschickt wird, dann kann nach jedem Beschickungsvorgang eine Entlüftung vorgenommen werden. Dies ist auch bei Vorrichtungen zum Beschichten von Abstandhalterrahmen mit Butylkautschuk denkbar, da jeweils nach dem Beschichten eines Abstandhalterrahmens oder aber auch nur eines Rahmenschenkels desselben Zeit für die Neubeschickung des Vorratszylinders mit Butylkautschuk und für die Entlüftung des Vorratszylinders zur Verfügung steht. Die Beschickung kann auch mit Hilfe eines Dosierzylinders aus einem großen Vorratszylinder erfolgen.

**Patentansprüche**

1. Vorratszylinder (10) zum Auspressen einer pastösen Masse, beispielsweise ein Vorratszylinder (10) für Butylkautschuk in Vorrichtungen zum Beschichten der Seitenflächen von Abstandhalterrahmen für Isolierglas, wobei der Vorratszylinder (10) einen mit Druck beaufschlagbaren Kolben enthält und auspreßseitig eine Verschlußplatte (11) vorgesehen ist, die vom Mantel dess Vorratszylinders (10) lösbar ist, und mit einer dem Vorratszylinder (10) zugeordneten Vorrichtung (16, 17, 18) zum Zusammenspannen von Vorratszylinder (10) und Verschlußplatte (11), dadurch gekennzeichnet, daß die Vorrichtung zum Zusammenspannen von Vorratszylinder (10) und Verschlußplatte (11) einen Druckmittelmotor (16), vorzugsweise einen Hydraulikzylinder aufweist, der bei mit der auszupressenden Masse beschicktem und mit Druck beaufschlagtem Vorratszylinder (10) über ein Ventil (34) in der Rücklaufleitung (32) für das Druckmedium kurzzeitig entlastbar ist, so daß der Vorratszylinder (10) kurzzeitig von der Verschlußplatte (11) lösbar ist.

2. Vorrichtung nach Anspruch 1, dadurch gekennzeichnet, daß der Druckmittelmotor (16) und der Preßzylinder (12), der den Kolben im Vorratszylinder (10) beaufschlagt, über eine gemeinsame Druckmittelleitung mit Druckmedium beaufschlagt werden, daß der den Kolben im Vorratszylinder (10) beaufschlagende Zylinder (12) über eine Rücklaufleitung (33) und der der Spannzylinder (16) über eine Rücklaufleitung (32) entlastbar sind und daß in der Rücklaufleitung (33) für den den Kolben im Vorratszylinder (10) beaufschlagenden Preßzylinder (12) wenigstens eine Drosselstelle (35) vorgesehen ist.

3. Vorrichtung nach Anspruch 1 oder 2, dadurch gekennzeichnet, daß das Entlastungsventil (34) ein von einer Zeitsteuerung gesteuertes Elektromagnetventil ist.

**Claims**

1. Storage cylinder (10) for extruding a pasty mass, for example a storage cylinder (10) for butyl rubber in devices for coating the side surfaces of spacer frames for insulating glass, wherein the storage cylinder (10) contains a piston actuated by pressure and is provided on the extrusion side with a closure plate (11) which is detachable from the jacket of the storage cylinder (10), and with a device (16, 17, 18) associated with the storage cylinder (10) for tightening together the storage cylinder (10) and the closure plate (11), characterized in that the device for tightening together the storage cylinder (10) and the closure plate (11) comprises a pressure medium motor (16), preferably a hydraulic cylinder, which can be relieved briefly, with the storage cylinder (10) supplied with the mass to be extruded and subjected to pressure, through a valve (34) in the return line (32) for the pressure medium, so that the storage cylinder (10) is briefly freed from the closure plate (11).

2. Device according to claim 1, characterized in that the pressure medium motor (16) and the pressure cylinder (12) which actuates the piston in the storage cylinder (10) are subjected to pressure medium through a common pressure medium line, in that the cylinder (12) actuating the piston in the storage cylinder (10) can be relieved via a return line (33) and the tightening cylinder (16) via a return line (32), and in that at least one throttle point (35) is provided in the return line (33) for the pressure cylinder (12) actuating the piston in the storage cylinder (10).

3. Device according to claim 1 or 2, characterized in that the relief valve (34) is an electromagnetic valve controlled by a time control.

**Revendications**

1. Cylindre-réservoir (10) pour exprimer une masse pâteuse, par exemple cylindre-réservoir (10) pour caoutchouc butyle dans des dispositifs pour revêtir les faces latérales de cadres intercalaires pour vitrages isolants, le cylindre-réservoir (10) contenant un piston pouvant être sollicité par pression, une plaque de fermeture (11) pouvant être désolidarisée de l'enveloppe du cylindre-réservoir (10) étant prévue côté sortie de la matière exprimée, et un dispositif (16, 17, 18) étant associé au cylindre-réservoir (10) pour solidariser par serrage le cylindre-réservoir (10) et la plaque de fermeture (11), caractérisé par le fait que le dispositif pour réunir par serrage le cylindre-réservoir (10) et la plaque de fermeture (11) présente un moteur à fluide de pression (16), de préférence un cylindre hydraulique qui, lorsque le cylindre-réservoir (10) est chargé avec de la masse à exprimer et est sollicité par pression, peut être brièvement mis hors-charge, via une vanne (34) sur la conduite (32) de retour de fluide de pression, de sorte que le cylindre-réservoir (10) peut être brièvement désolidarisé de la plaque de fermeture (11).

2. Dispositif selon revendication 1, caractérisé par le fait que le moteur à fluide de pression (16) et le cylindre presseur (12) sollicitant le piston dans le cylindre-réservoir (10) sont alimentés en fluide de pression par une conduite commune pour ce fluide de pression, par le fait que le cylindre (12) sollicitant le piston dans le cylindre-réservoir (10) peut être mis hors charge par une conduite de retour (33) et le piston du cylindre de serrage (16) peut être mis hors-charge par une conduite de retour (32), et par le fait qu'au moins un étranglement (35) est prévu sur la conduite de retour (33) pour le cylindre presseur (12) sollicitant le piston dans le cylindre-réservoir (10).

3. Dispositif selon revendication 1 ou 2, caractérisé par le fait que la vanne de mise hors-charge (34) est une vanne électromagnétique commandée par une commande temporisée.

**FIG.1**

EP 0 311 593 B1

Fig. 2